# EUROPEAN PATENT SPECIFICATION

(11) **EP 2 919 985 B1**
(45) Date of publication and mention of the grant of the patent: **05.07.2023**
(21) Application number: 13855993.5
(22) Date of filing: 15.11.2013
(51) Int. Cl.: B32B 5/02, B32B 27/06, B32B 27/10, B32B 27/12, B32B 27/28, B32B 27/34, H02K 3/30

(54) **COMPOSITE INSULATING FILM**
ISOLIERENDER VERBUNDFILM
FILM ISOLANT COMPOSITE

(30) Priority: 15.11.2012 US 201213678470
(43) Date of publication of application: 23.09.2015
(73) Proprietor: Elantas Pdg, Inc., St. Louis, Missouri 63147 (US)
(72) Inventor: MURRAY, Thomas James, Chesterfield, Missouri 63005 (US); WINKELER, Mark Gerard, Maryville, Illinois 62062 (US); RAWAL, Heta S., St. Louis, Missouri 63124 (US)
(74) Representative: Fitzner, Uwe
(86) International application number: PCT/US2013/070324
(87) International publication number: WO 2014/078665

(56) References cited:
- EP-A1- 0 672 521
- US-A- 3 453 292
- US-A- 4 503 124
- US-A- 4 521 956
- US-A- 5 324 475
- US-A1- 2007 166 559
- US-A1- 2008 154 014
- US-A1- 2009 294 151
- US-A1- 2012 103 661
- US-A1- 2012 123 063
- US-A1- 2012 211 258
- US-A1- 2012 244 332

## Description

### TECHNICAL FIELD

Disclosed is a flexible and self-supporting composite insulating film for use in electrical insulation applications, a process for preparing a flexible and self-supporting composite insulating film and a method of providing insulation as well as an electric motor or transformer comprising the film. The composite insulating films includes a layer of partially cured poly(amide)imide that has been laminated to a base support layer through the use of an adhesive.

### BACKGROUND

Resinous coating compositions based on poly(amide)imide form flexible and durable films and are particularly useful as wire enamels, varnishes, adhesives for laminates, paints and the like. Such poly(amide)imide base coating compositions are particularly noted for their long term high temperature capability of the order of 220°C, which, in addition to their other qualities, makes them particularly useful in electrical insulating applications such as for magnet wire enamels. This is as compared to the usual polyester and polyesterimide base coating compositions which do not have such highly continuous heat resistance.

Poly(amide)imides are generally prepared using relatively expensive organic solvents, the economic use of amideimide coatings has been inhibited. Therefore, it has been customary to use such poly(amide)imide compositions as overcoats over less expensive polyester or polyesterimide base coats.

Polyethylene terephthalate (PET) films are widely used as electrical insulating films in view of their mechanical and electrical properties, and relatively low production costs. However, PET films possess low thermal resistance and therefore are ranked as Class B insulation or lower. Polyaramid films, such as those commercially available from Du Pont under the trademark NOMEX, exhibit superior thermal resistance as compared to PET films but have reported dielectric breakdown problems.

Poly(amide)imide films exhibit mechanical properties, thermal properties, abrasion resistance, and chemical resistance that make them suitable as electrical insulation materials. While poly(amide)imide films exhibit a number of superior physical properties as compared to polyaramid and polyester films, cost and free standing film property considerations have hindered commercialization of poly(amide)imide films for electrical insulation applications.

As prior art in this context US 4,521,956 and EP 0 672 521 A1 could be mentioned.

What is therefore needed in the art is a cost-effective electrical insulation material that exhibits a suitable combination of mechanical properties, thermal properties, abrasion resistance, and chemical resistance.

### SUMMARY

The present summary section is intended to provide a summary of the disclosure in order to provide a basic understanding of the composite insulating film and methods of preparation and use to the reader. This summary section is not intended to constitute an extensive overview of the disclosure of the composite film and methods of preparation and use and it does not identify key/critical elements of the composite film or methods nor does it delineate the scope of the disclosure. The sole purpose of the present summary section is to present some concepts disclosed herein in a simplified form as an introduction to the more detailed description that is presented below.

Provided is a flexible and self-supporting composite film comprising a base support layer; and a partially cured poly(amide)imide film layer.

According to certain illustrative embodiments, provided is a flexible and self-supporting composite film comprising a base polymer layer; and a partially cured poly(amide)imide film layer.

Also provided is a process for preparing a flexible and self-supporting composite film comprising providing a base support layer, casting a poly(amide)imide film layer on said base support layer, and partially curing said poly(amide)imide film layer.

According to certain illustrative embodiments, provided is a process for preparing a flexible and self-supporting composite film comprising providing a base polymer layer, casting a poly(amide)imide film layer on said base polymer layer, and partially curing said poly(amide)imide film layer.

Additionally provided is a method of providing insulation to an electric motor or transformer comprising providing a flexible and self-supporting composite film comprising a base support layer and a partially cured poly(amide)imide film layer on said base support layer and inserting said composite film into an electric motor slot or transformer.

According to certain illustrative embodiments, additionally provided is a method of providing insulation to an electric motor or transformer comprising providing a flexible and self-supporting composite film comprising a base polymer layer and a partially cured poly(amide)imide film layer on said base polymer layer and inserting said composite film into an electric motor slot or transformer.

Further provided is an electric motor or transformer comprising a component to be insulated and a flexible and self-supporting composite film comprising a base support layer and a partially cured poly(amide)imide film layer on said base support layer adjacent said component.

Further provided is an electric motor or transformer comprising a component to be insulated and a flexible and self-supporting composite film comprising a base polymer layer and a partially cured poly(amide)imide film layer on said base polymer layer adjacent said component.

Further provided is a method of providing insulation to an electric motor comprising providing an electric motor component having a slot therein and inserting a flexible and self-supporting composite film comprising a base support layer and a partially cured poly(amide)imide film layer on said base support layer into said slot.

Further provided is a method of providing insulation to an electric motor comprising providing an electric motor component having a slot therein and inserting a flexible and self-supporting composite film comprising a base polymer layer and a partially cured poly(amide)imide film layer on said base polymer layer into said slot.

### BRIEF DSCRIPTION OF THE DRAWINGS

FIG. 1 is a graph depicting a thermomechanical analysis (TMA) of an uncured cast high molecular weight poly(amide)imide film.
FIG. 2 is a graph depicting a thermomechanical analysis (TMA) of an fully cured cast high molecular weight poly(amide)imide film.
FIG. 3 is a graph depicting a modulated differential scanning calorimetry analysis (mDSC) on uncured high molecular weight poly(amide)imide film.
FIG. 4 is a graph depicting a differential scanning calorimetry analysis (mDSC) showing the reversing and non-reversing heat flow components on first heating cycle of a high molecular weight poly(amide)imide film.
FIG. 5 is a graph depicting a differential scanning calorimetry analysis (mDSC) showing the reversing heat flow component showing for a second heating cycle of cured high molecular weight poly(amide)imide film.
FIG. 6 is a graph depicting a thermomechanical analysis (TMA) of an uncured cast low molecular weight poly(amide)imide film.
FIG. 7 is a graph depicting a thermomechanical analysis (TMA) of a fully cured cast low molecular weight poly(amide)imide film.
FIG. 8 is a graph depicting a modulated differential scanning calorimetry analysis (mDSC) showing the reversing and non-reversing heat flow components on first heating cycle of a low molecular weight poly(amide)imide film.
FIG. 9 is a graph depicting a differential scanning calorimetry analysis (mDSC) showing the reversing heat flow component showing for a second heating cycle of cured low molecular weight poly(amide)imide film.

### DETAILED DESCRIPTION

Disclosed is a flexible and self-supporting composite insulating film according to claim 1. Also disclosed is a process for preparing a flexible and self-supporting composite film according to claim 4. Further disclosed is a method of providing insulation to an electric motor or transformer according to claim 7 as well as an electric motor or transformer according to claim 8.

According to certain illustrative embodiments of the composite insulating film, the partially cured poly(amide)imide film layer is first cast onto a surface of the first base polymer layer.

The partially cured poly(amide)imide film layer can be stripped from the surface of the first base support layer and laminated to the surface of a second base support layer through the use of an adhesive. This allows the use of more thermally stable or economic base support layers such as glass cloth, non-woven materials, organic papers, and inorganic papers.

Without limitation, and only by way of illustration, the first base support layer may be selected from a polyamide film, a polyimide film, a polyester film such as polyesterterephthalate (PET) or polyesternaphthenate (PEN), a polyethersulfone film, a polysulfone film, glass cloth, non-woven material, inorganic papers, organic papers, or a polyetherimide film. According to certain illustrative embodiments, the first base support layer comprises a polyester film.

The composite insulating film comprising the first base support layer of a polyester and having a poly(amide)imide film layer applied thereon may have a thickness from about 50.8 µm (2 mils) to about 508 µm (20 mils). According to certain illustrative embodiments, the composite insulating film may have an overall thickness from about 63.5 µm (2.5 mils) to about 406.4 µm (16 mils). The partially cured poly(amide)imide layer of the composite insulating film may have a thickness from about 12.7 µm (0.5) to about 50.8 µm (2 mils). The poly(amide)imide layer may be applied to one or both of the opposite facing surfaces of the polyester layer. The thin nature of the composite film exhibits flexibility, sufficient structural integrity to be inserted into electric motor slot, and exhibits thermal index up to about 220°C.

The flexible and self-supporting composite insulating film may be prepared by a process that includes providing a base support layer and applying a poly(amide)imide layer onto a surface of the base support layer.

According to certain embodiments, the composite film may be prepared by first providing the base polymer film layer and casting a poly(amide)imide film layer onto a surface of the base polymer film layer. According to certain illustrative embodiments, the poly(amide)imide film layer is cast onto one major surface of the base polymer layer. However, according to other illustrative embodiments, the poly(amide)imide layer may be cast onto both of the opposite facing major surfaces of the base polymer layer. The poly(amide)imide layer or layers are then partially cured. This provides a flexible and self-supporting composite film having a structural integrity making the film suitable for insertion into a slot in an electric motor.

The process for preparing the composite insulating film according to the invention includes providing a base support layer that is selected from a polyamide film, a polyimide film, a polyester film, a polyethersulfone film, a polysulfone film, organic papers, inorganic papers, or a polyetherimide film. According to certain embodiments, the process includes selecting or preparing a base support layer of a polyester film having a thickness from about 50.8 µm (2 mils) to about 355.6 µm (14 mils). A poly(amide)imide film layer is cast onto the surface of the base polyester film layer. The poly(amide)imide may be cast on the base polyester layer to achieve a thickness from about 12.7 µm (0.5 mil) to about 50.8 µm (2 mil). The poly(amide)imide layer may be cast onto one or both of the opposite facing surfaces of the polyester base layer.

Once the poly(amide)imide film layer is cast onto the surface of the base polyester layer, then the poly(amide)imide layer is partially cured to obtain a composite insulating film that is flexible and self-supporting. The poly(amide)imide film layer may be partially cured by heating the layer at a temperature of about 100°C to about 260°C for about 20 seconds to about 60 minutes. Alternatively, the poly(amide)imide film layer may be partially cured by heating the layer at a temperature of about 150°C to about 180°C for about 1 minute to about 10 minutes.

According to certain embodiments not covered by the present claims, the composite film may be prepared by first providing the base support layer comprising a glass cloth and casting a poly(amide)imide film layer onto a surface of the base glass cloth layer. According to certain illustrative embodiments, the poly(amide)imide film layer is cast onto one major surface of the base glass cloth layer. However, according to other illustrative embodiments, the poly(amide)imide layer may be cast onto both of the opposite facing major surfaces of the base glass cloth layer. The poly(amide)imide layer or layers are then partially cured. This provides a flexible and self-supporting composite film having a structural integrity making the film suitable for insertion into a slot in an electric motor.

According to certain embodiments not covered by the present claims, the composite film may be prepared by first providing the base support layer comprising a non-woven material and casting a poly(amide)imide film layer onto a surface of the base non-woven material layer. According to certain illustrative embodiments, the poly(amide)imide film layer is cast onto one major surface of the base non-woven material layer. However, according to other illustrative embodiments, the poly(amide)imide layer may be cast onto both of the opposite facing major surfaces of the base non-woven material layer. The poly(amide)imide layer or layers are then partially cured. This provides a flexible and self-supporting composite film having a structural integrity making the film suitable for insertion into a slot in an electric motor.

According to certain embodiments not covered by the present claims, the composite film may be prepared by first providing the base support layer comprising an inorganic paper and casting a poly(amide)imide film layer onto a surface of the base inorganic paper layer. According to certain illustrative embodiments, the poly(amide)imide film layer is cast onto one major surface of the base inorganic paper layer. However, according to other illustrative embodiments, the poly(amide)imide layer may be cast onto both of the opposite facing major surfaces of the base inorganic paper layer. The poly(amide)imide layer or layers are then partially cured. This provides a flexible and self-supporting composite film having a structural integrity making the film suitable for insertion into a slot in an electric motor.

According to certain embodiments not covered by the present claims, the composite film may be prepared by first providing the base support layer comprising an organic paper and casting a poly(amide)imide film layer onto a surface of the base organic paper layer. According to certain illustrative embodiments, the poly(amide)imide film layer is cast onto one major surface of the base organic paper layer. However, according to other illustrative embodiments, the poly(amide)imide layer may be cast onto both of the opposite facing major surfaces of the base organic paper layer. The poly(amide)imide layer or layers are then partially cured. This provides a flexible and self-supporting composite film having a structural integrity making the film suitable for insertion into a slot in an electric motor.

The cast partially cured poly(amide)imide film layer is stripped from the surface of the first base support layer and laminated to the surface of a second base support layer through the use of an adhesive. This allows the use of more thermally stable or economic base support layers of glass cloth. The adhesive can be pressure sensitive and thermosetting adhesives. Aqueous, solvent borne or solventless adhesives are possible materials to adhere the partially cured poly(amide)imide film to the base support layer. The adhesive can be applied to either the top surface of the partially cured poly(amide)imide film or to the base support layer. The two layers are then laminated together with pressure and with or without heat. The first base support layer can then be removed or stripped from the adhesive laminated partially cured poly(amide)imide film and the second base support layer.

Alternatively, but not covered by the present claims, the partially cured poly(amide)imide film layer can be stripped from the base support layer first and then laminated to a second base support layer with an adhesive. The adhesive can be of a variety of materials. Pressure sensitive and thermosetting adhesives can be used. Aqueous, solvent borne or solventless adhesives are possible materials to adhere the partially cured poly(amide)imide film to the base support layer. The adhesive can be applied to either the top surface of the partially cured poly(amide)imide film or to the base support layer. The two layers are then laminated together with pressure and with or without heat.

There is no limitation to the poly(amide)imide as a basic resin that may be used to prepare the composite insulating film. There can be used a polyamideimide, for example, obtained by direct reaction of a tricarboxylic acid anhydride and diisocyanates in a polar solvent or obtained by reacting a tricarboxylic acid anhydride with diamines in a polar solvent to introduce imide bonds and then carrying out amidation with diisocyanates, in a usual manner. A further illustrative method is the reaction tricarboxylic anhydride acid chloride with diamines in a polar solvent.

As the tricarboxylic acid anhydride that can be used for preparing this basic resin for the film forming layer, a trimellitic acid anhydride is generally used. A variety of carboxylic anhydrides are used in making poly(amide)imides. These include, but are not limited to: trimellitic anhydride (TMA); 2,6,7-naphthalene tricarboxylic anhydride; 3,3',4-diphenyl tricarboxylic anhydride; 3,3',4-benzophenone tricarboxylic anhydride; 1,3,4-cyclopentane tetracarboxylic anhydride; 2,2',3-diphenyl tricarboxylic anhydride; diphenyl sulfone 3,3',4-tricarboxylic anhydride; diphenyl isopropylidene 3,3',4-tricarboxylic anhydride; 3,4,10-perylene tricarboxylic anhydride; 3,4-dicarboxyphenyl 3-carboxyphenyl ether anhydride; ethylene tricarboxylic an hydride; 1,2,5-naphthalene tricarboxylic anhydride.

A part of the amount of the tricarboxylic acid anhydride may be replaced by a tetracarboxylic acid anhydride when it is reacted. As the tetracarboxylic acid anhydride in this case, use can be made, for example, of pyromellitic acid dianhydride, 3,3',4,4'-benzophenonetetracarboxylic acid dianhydride, or the like. Further, a part of the amount of the tricarboxylic acid anhydride may be replaced by another acid or acid anhydride, for example, trimellitic acid, isophthalic acid, adipic, maleic, or terephthalic acid.

Non-limiting examples of the diisocyanates that can be reacted with the tricarboxylic acid anhydride, include aromatic diisocyanates such as 4,4-diphenylmethane diisocyanate and tolylene diisocyanate, and examples of the diamine include aromatic diamines such as m-phenylenediamine, 4,4'-diaminodiphenyl ether, 1,2-ethylenediamine, 4,4'-diaminodiphenylmethane, 4,4'-diaminodiphenylsulfon and 4,4'-diaminobenzophenone.

According to certain embodiments not covered by the present claims, the poly(amide)imide resin may be used in combination with one or more other compatible resins to prepare the composite insulating film. For example, and not in limitation, the poly(amide)imide resin may be used in combination with one or more of the following compatible resins to prepare the composite insulating film: polyimides, polyetherimide, polysulfone, polyethersulfone, polyvinyl alcohol, polyvinylbutyral, polyetherketone, phenoxy resins, and combinations thereof.

The additional compatible resins may be used in combination with the poly(amide)imide resin to improve a variety of different performance properties of the composite insulation film. For example, the one or more additional resin may be used in combination with the poly(amide)imide resin to improve the adhesion, thermal endurance, and/or flexibility of the resulting composite insulating film. According to certain illustrative embodiments, the poly(amide)imide film may be used in combination with polyethersulfone to improve the adhesion of the resulting composite insulating film to aluminum. For example, and without limitation, the polyethersulfone maybe blended with the poly(amide)imide in an amount from about 1 weight percent to about 99 weight percent.

The present disclosure also includes a method of providing insulation to an electric motor or transformer. The method of providing insulation to an electric motor or transformer includes providing a flexible and self-supporting composite film according to the invention and inserting the composite film into an electric motor slot or transformer.

According to certain embodiments, the method of providing insulation to an electric motor or transformer includes providing a flexible and self-supporting composite film comprising a base support layer comprising a glass cloth and a partially cured poly(amide)imide film layer onto the base glass cloth layer and inserting the composite film into an electric motor slot or transformer.

According to certain embodiments not covered by the present claims, the method of providing insulation to an electric motor or transformer includes providing a flexible and self-supporting composite film comprising a base support layer comprising a non-woven material and a partially cured poly(amide)imide film layer onto the base non-woven material layer and inserting the composite film into an electric motor slot or transformer.

According to certain embodiments not covered by the present claims, the method of providing insulation to an electric motor or transformer includes providing a flexible and self-supporting composite film comprising a base support layer comprising an inorganic paper and a partially cured poly(amide)imide film layer onto the base inorganic paper layer and inserting the composite film into an electric motor slot or transformer.

According to certain embodiments not covered by the present claims, the method of providing insulation to an electric motor or transformer includes providing a flexible and self-supporting composite film comprising a base support layer comprising an organic paper and a partially cured poly(amide)imide film layer onto the base organic paper layer and inserting the composite film into an electric motor slot or transformer.

The following non-limiting amines can be useful either alone or in mixtures: p-xylene diamine, bis(4-amino-cyclohexyl)methane, hexamethylene diamine, heptamethylene diamine, octamethylene diamine, nonamethylene diamine, decamethylene diamine, 3-methyl-heptamethylene diamine, 4,4'-dimethylheptamethylene diamine, 2,11-diamino-dodecane, 1,2-bis-(3-amino-propoxy)ethane, 2,2-dimethyl propylene diamine, 3-methoxy-hexamethylene diamine, 2,5-dimethylhexamethylene diamine, 2,5-dimethylheptamethylene diamine, 5-methylnonamethylene diamine, 1,4-diamino-cyclo-hexane, 1,12-diamino-octadecane, 2,5-diamino-1,3,4-oxadiazole, H₂N(CH₂)₃O(CH₂)₂O(CH₂)₃NH₂, H₂N(CH₂)S(CH₂)₃NH₂, H₂N(CH₂)₃N(CH₃)(CH₂)₃NH₂ meta-phenylene diamine, para-phenylene diamine, 4,4'-diamino-diphenyl propane, 4,4'-diamino-diphenyl methane benzidine, 4,4'-diamino-diphenyl sulfide, 4,4'-diamino-diphenyl sulfone, 3,3'-diamino-diphenyl sulfone, 4,4'-diamino-diphenyl ether, 2,6-diamino-pyridine, bis(4-amino-phenyl)diethyl silane, bis(4-amino-phenyl)diphenyl silane, [bis(4-amino-phenyl)phosphine oxide, 4,4'-diaminobenzophenone, bis(4-amino-phenyl)-N-methylamine, bis(4-aminobutyl)tetramethyldisiloxane, 1,5-diaminonaphthalene, 3,3'-dimethyl-4,4'-diamino-biphenyl, 3,3'-dimethoxy benzidine, 2,4-bis(beta-amino-t-butyl)toluene toluene diamine, bis(para-beta-amino-t-butyl-phenyl)ether, para-bis(2-methyl-4-amino-pentyl)benzene, para-bis(11,1-dimethyl-5-aminopentyl)benzene, m-xylylene diamine, and polymethylene polyaniline.

Any polyisocyanate, that is, any isocyanate having two or more isocyanate groups, whether blocked or unblocked, can be used in making polyamideimides. Polyisocyanates which are useful alone, or in admixture, include: tetramethylenediisocyanate, hexamethylenediisocyanate, 1,4-phenylenediisocyanate, 1,3-phenylenediisocyanate, 1,4-cyclohexylenediisocyanate, 2,4-tolylenediisocyanate, 2,5-tolylenediisocyanate, 2,6-tolylenediisocyanate, 3,5-tolylenediisocyanate 4-chloro-1,3-phenylenediisocyanate, 1-methoxy-2,4-phenylenediisocyanate, 1-methyl-3,5-diethyl-2,6-phenylenediisocyanate, 1,3,5-triethyl-2,4-phenylenediisocyanate, 1-methyl-3,5-diethyl-2,4-phenylenediisocyanate, 1-methyl-3,5-diethyl-6-chloro-2,4-phenylenediisocyanate, 6-methyl-2,4-diethyl-5-nitro-1,3-phenylenediisocyanate, p-xylylenediisocyanate, m-xylylenediisocyanate, 4,6-dimethyl-1,3-xylylenediisocyanate, 1,3-dimethyl-4,6-bis-(b-isocyanatoethyl)-benzene, 3-(a-isocyanatoethyl)-phenylisocyanate, 1-methyl-2,4-cyclohexylenediisocyanate, 4,4'-biphenylenediisocyanate, 3,3'-dimethyl-4,4'-biphenylenediisocyanate, 3,3'-dimethoxy-4,4'-biphenylenediisocyanate, 3,3'-diethoxy-4,4-biphenylenediisocyanate, 1,1-bis-(4-isocyanatophenyl)cyclohexane, 4,4'-diisocyanato-diphenylether, 4,4'-diisocyanato-dicyclohexylmethane, 4,4'-diisocyanato-diphenylmethane, 4,4'-diisocyanato-3,3'-dimethyldiphenylmethane, 4,4'-diisocyanato-3,3'-dichlorodiphenylmethane, 4,4'-diisocyanato-diphenyldimethylmethane, 1,5-naphthylenediisocyanate, 1,4-naphthylenediisocyanate, 4,4',4"-triisocyanato-triphenylmethane, 2,4,4'-triisocyanato-diphenylether, 2,4,6-triisocyanato-1-methyl-3,5-diethylbenzene, o-tolidine-4,4'-diisocyanate, m-tolidine-4,4'-diisocyanate, benzophenone-4,4'-diisocyanate, biuret triisocyanates, and polymethylenepolyphenylene isocyanate.

Further disclosed is an electric motor or transformer comprising a component to be insulated; and a flexible and self-supporting composite film according to the invention that is positioned adjacent to the component being insulated. The composite insulating film may be used in a typical 3-phase stator with slot liners. The stator is positioned within a housing and having a rotor in the center. The metal material on the stator comprises the core. Suitably shaped slot liners (such as, for example, shaped like a C) are inserted in the slots. The copper coils are then inserted in the slots, using the composite insulating film liner as an insulation barrier between the core and the copper windings. A second piece of material is inserted that is the inverse of the slot liner (also C shape), which is referred to in the art as "wedge," to maintain the copper in slot so that it doesn't move around.

The composite electrical insulating film has been tested for fabrication properties. The material exhibited superior performance in the ability to be slit, die cute, sheeted and otherwise processed. Drag knife cutting of small parts was also capable of being carried out with issue. Laser cutting of the material was also performed without issue or char that is typically associated with NOMEX based materials. Formation of wedges in an automated process was also examined, and the composite film performed very well with cuffing and insertion in an automated line without scratching or delamination. Wire insertion in the motor slots exhibited minimal resistance as compared to other known materials.

Further disclosed is a method of providing insulation to an electric motor comprising providing an electric motor component having a slot therein. A flexible and self-supporting composite film according to the invention is inserted into the slot.

Further disclosed is a method of providing insulation to an electric motor comprising providing an electric motor component having a slot therein. A flexible and self-supporting composite film according to the invention is inserted into the slot.

Further disclosed is a method of providing insulation to an electric motor comprising providing an electric motor component having a slot therein. A flexible and self-supporting composite film comprising a base support layer comprising a glass cloth and a partially cured poly(amide)imide film layer on the base glass cloth layer is inserted into the slot.

Further disclosed is a method not covered by the present claims of providing insulation to an electric motor comprising providing an electric motor component having a slot therein. A flexible and self-supporting composite film comprising a base support layer comprising a non-woven material layer and a partially cured poly(amide)imide film layer on the base non-woven material layer is inserted into the slot.

Further disclosed is a method not covered by the present claims of providing insulation to an electric motor comprising providing an electric motor component having a slot therein. A flexible and self-supporting composite film comprising a base support layer comprising an inorganic paper layer and a partially cured poly(amide)imide film layer on the base inorganic paper layer is inserted into the slot.

Further disclosed is a method not covered by the present claims of providing insulation to an electric motor comprising providing an electric motor component having a slot therein. A flexible and self-supporting composite film comprising a base support layer comprising an organic paper layer and a partially cured poly(amide)imide film layer on the base organic paper layer is inserted into the slot.

The following examples are set forth to describe the composite insulating films and methods in further detail and to illustrate. The examples following should not be construed as limiting the composite insulating films or method of preparation in any manner.

### EXAMPLES

### Example 1: Synthesis of high molecular weight poly(amide)imide.

In a 3L flask equipped with thermocouple, water condenser, nitrogen inlet and air driven blade stirrer, 916.7 g of N-methyl -2-pyrrolidone (NMP) was added under agitation (nitrogen flow 0.5 L/min). Trimellitic anhydride (107.2g, 0.558 moles) and diphenylmethane-4, 4' diisocyanate (153.5 g, 0.614 moles) were added under agitation. The reaction mixture was heated to 93°C and held at that temperature for about one hour, and then heated to 120°C and held for about one hour. The reaction mixture was then heated to 138-150°C and viscosity was monitored by G-H tube (pulled 15 g sample from flask and diluted to 20 g in NMP for viscosity measurement). When the viscosity reached to Z, heating was stopped and 300 g of NMP was added. On cooling at 100°C, 4.4 g of n-butanol and 90.7 g NMP were added. An analysis of the reaction product revealed 15.9% solids (after 2 hours at 200°C) and a viscosity of 2751 mPa S (cps) at 25°C.

### Example 2: Synthesis of intermediate molecular weight poly(amide)imide.

In a 3L flask equipped with thermocouple, water condenser, nitrogen inlet and air driven blade stirrer, 916.7 g of N-methyl -2-pyrrolidone (NMP) was added under agitation (nitrogen flow 0.5 L/min). Trimellitic anhydride (107.2g, 0.558 moles) and diphenylmethane-4, 4' diisocyanate (153.5 g, 0.614 moles) were added under agitation. The reaction mixture was heated to 93°C and held for one hour, and then heated to 120°C and held for 1 hour. The reaction mixture was then heated to 138-150°C and viscosity was monitored by G-H tube (pulled 15 g sample from flask and diluted to 20 g in NMP for viscosity measurement). When the viscosity reached to S, heating was stopped and 300 g of NMP was added. On cooling at 100°C, 4.4 g of n-butanol and 90.7 g NMP were added. An analysis of the reaction product revealed 15.4% solids (after 2 hours at 200°C) and a viscosity of 506 mPa s (cps) at 25°C.

### Example 3: Synthesis of low molecular weight poly(amide)imide.

In a 3L flask equipped with thermocouple, water condenser, nitrogen inlet and air driven blade stirrer, 500.1 g of N-methyl -2-pyrrolidone (NMP) was added under agitation (nitrogen flow 0.5 L/min). Trimellitic anhydride (124.2g, 0.646 moles) and diphenylmethane-4, 4' diisocyanate (161.6g, 0.646 moles) were added under agitation. The reaction mixture was heated to 93°C and held for one hour, and then heated to 120°C and held for 1 hour. Viscosity was monitored by G-H tube (pulled 45 g sample from flask and diluted to 66 g in NMP for viscosity measurement). When the viscosity reached to Z, heating was stopped and 125 g of NMP was added. On cooling at 100°C, 2.3 g of methanol and 165 g NMP were added. An analysis of the reaction product revealed 25.4% solids (after 2 hours at 200°C) and a viscosity of 2402 mPa s (cps) at 25°C

The resin solutions were cast onto a glass support and partially cured at 150°C for 60 minutes followed by a full-cure at 260°C for 20 minutes. The properties of the cured low, intermediate, and high molecular weight poly(amide)imide films are set forth below in Tables 1A and 1B.

### Cured Film Properties

**Table 1A**

| Example | Mn | Tensile strength MPa (PSI) | Tensile Modulus MPa (PSI) |
|---|---|---|---|
| 1 | 7000 | brittle | brittle |
| 2 | 14000 | 96.53 (14000) | 3033.7 (440000) |
| 3 | 36000 | 110.32 (16000) | 2275.27 (330000) |

**Table 1B**

| Sample | Tg (°C) | Elmendorf Tear Strength (g/µm) ((gm/mil)) | Graves Tear Strength (N/µm) ((lbf/mil)) |
|---|---|---|---|
| 1 | 270 | brittle | brittle |
| 2 | 270 | 0.22 (5.7) | 0.245 (1.4) |
| 3 | 250 | 0.32 (8) | 0.315 (1.8) |

The cured film properties of tensile strength and tensile modulus reported in Table 1A were obtained in accordance with -ASTM D-882-91 Method A.

The Elmendorf Tear strength was obtained in accordance with ASTM D-1922-89.

The Graves Tear Strength was obtained in accordance with ASTM-D-1004-90.

### Uncured Film Properties

The poly(amide)imide resin solutions were cast onto front and back side of a base PET polyester film (100 microns) using a slot coating method. The composite film was then dried in an oven at 175°C for roughly 2 minutes to remove all solvent leaving 12.5 microns of a partially cured PAI layer on both the front and back sides of the PET film. The mechanical properties (elongation, tensile modulus, tensile strength) and tear strength of composite insulating films comprising a layer of polyester film and including layers of uncured poly(amide)imide are set forth in Tables 2A and 2B below.

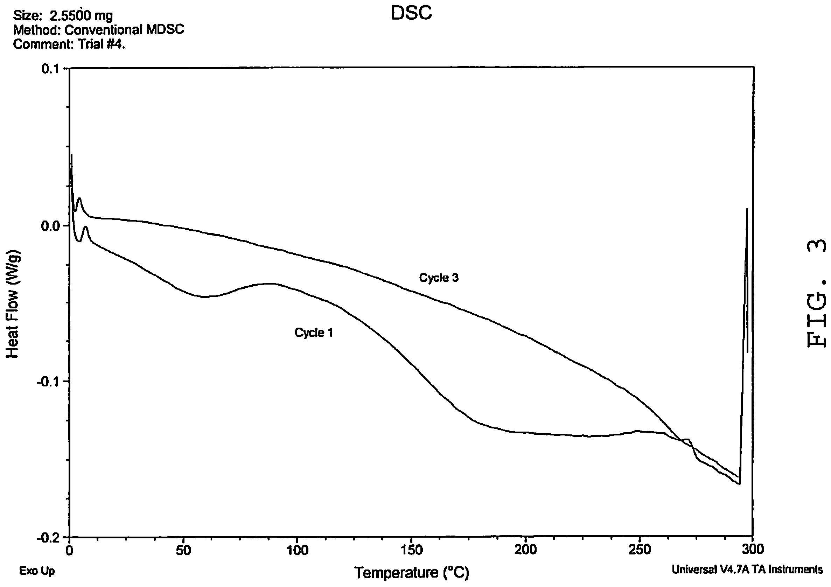

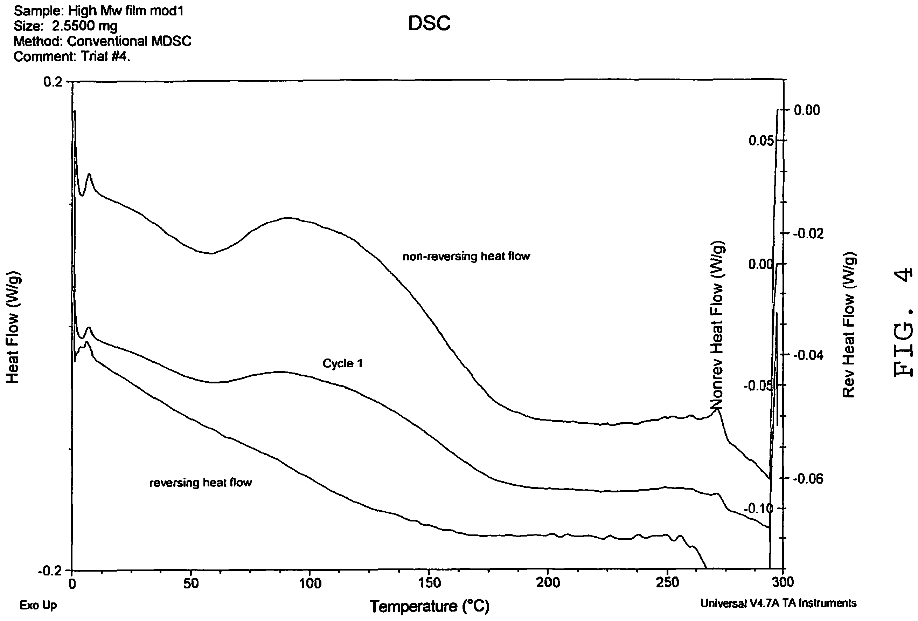

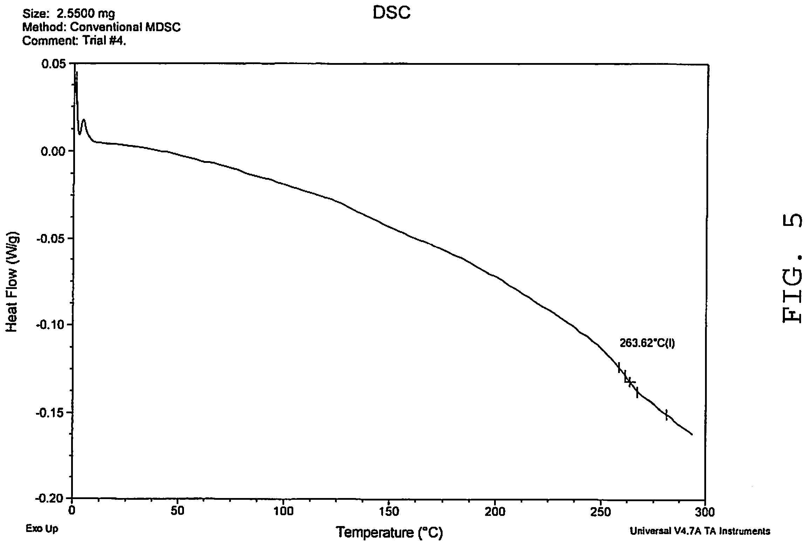

The poly(amide)imide layer can be removed from the PET base and examined for cure state by modulated differential scanning calorimetry (Figure 3). A broad exotherm is seen between 50-200°C that is non-reverseable heat flow event (Figure 4). This suggests a curing event is possibly taking place under these conditions. A second heating shows glass transition of roughly 270°C showing the fully cured film properties (Figure 5).

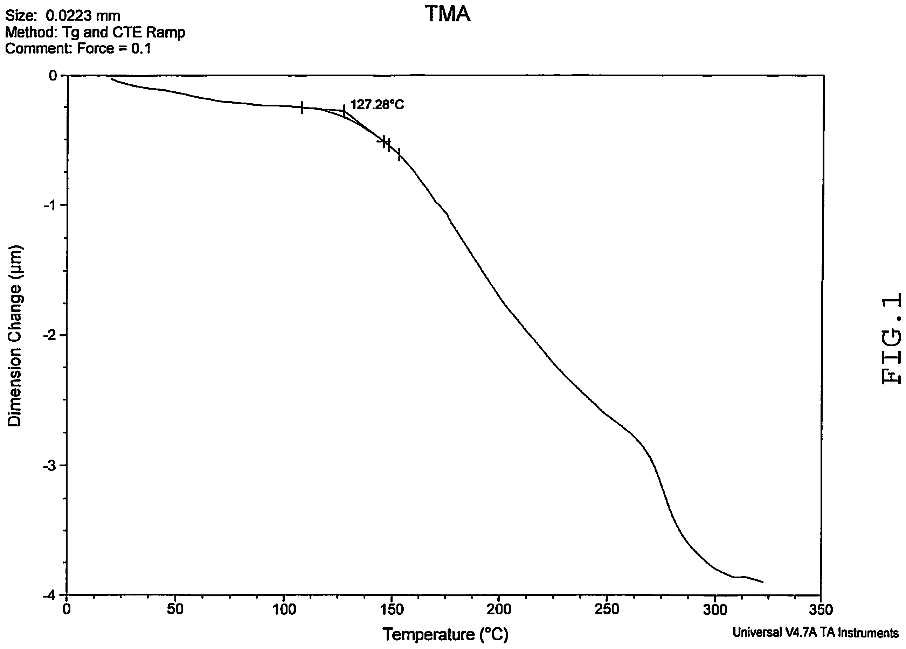

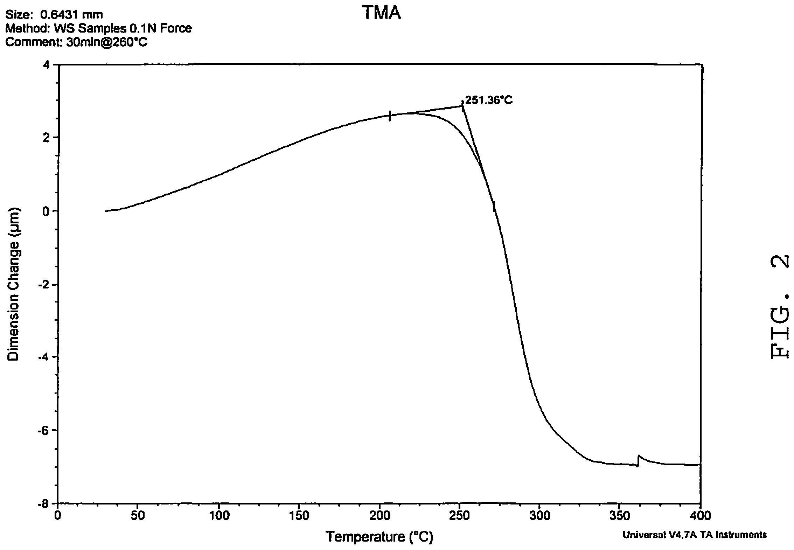

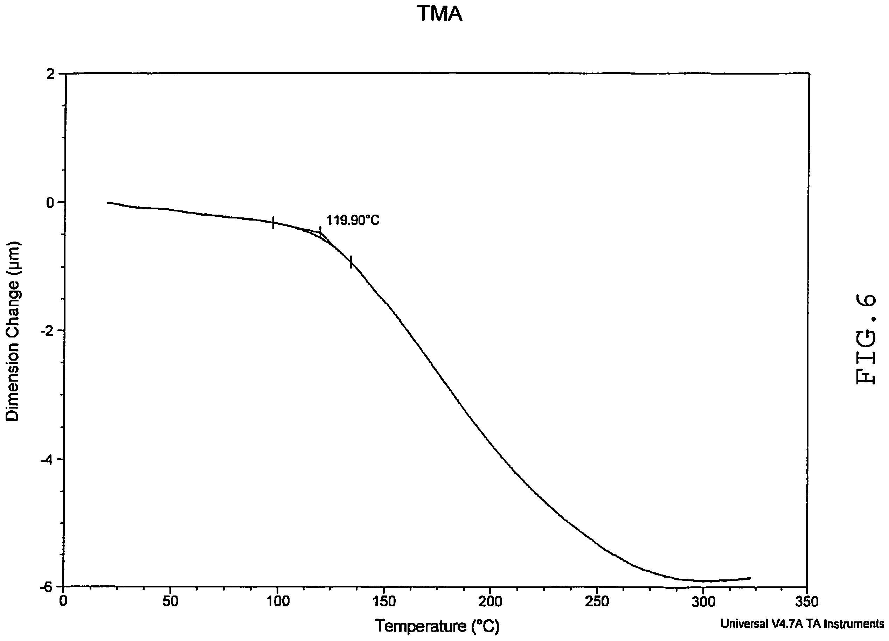

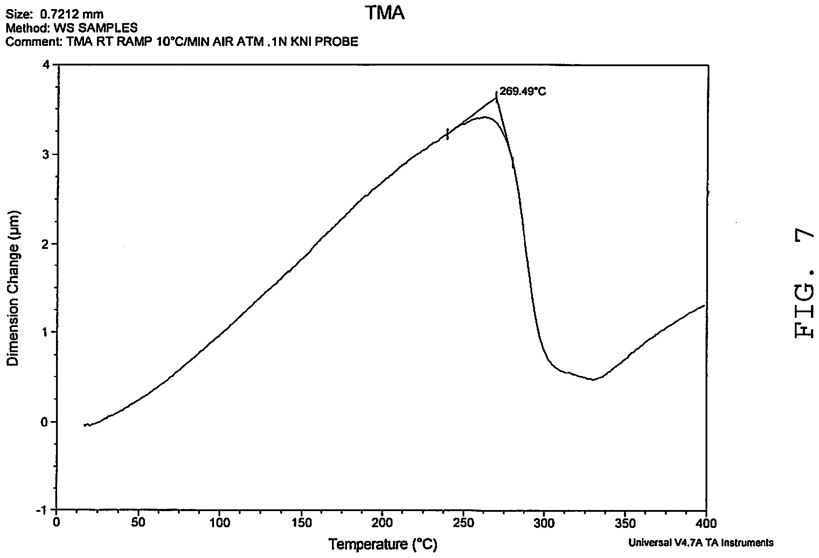

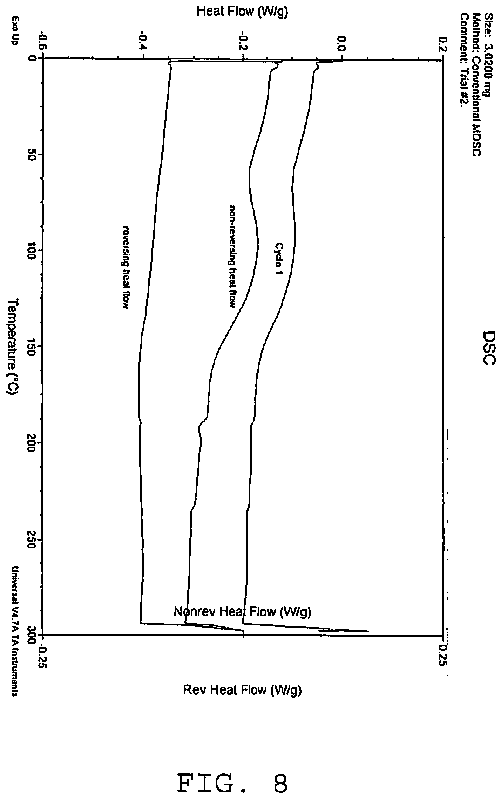

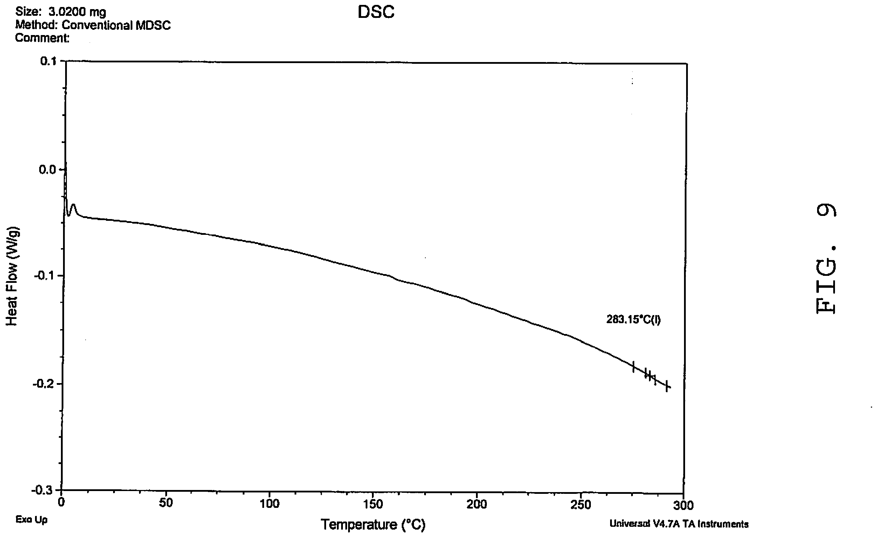

The partially cured film is also confirmed by thermomechanical analysis (TMA). The TMA of partially cured poly(amide)imide film shows a potential glass transition at 115-127°C (Figure 1). A fully cured film (260°C for 30 minutes) shows a glass transition at roughly 250-270°C by this method (Figure 2). Figures 6-9 depict the same thermal analysis of the low Mw PAI film that was cast on a PET base polymer.

**Table 2A - Tear Strength**

| Sample | Tear Strength (kg/cm) ((lb/in)) |
|---|---|
| High Mw PAI/PET/High Mw PAI, 125 microns | 269.66 (1510) |
| Low Mw PAI/PET/ Low Mw PAI 125 microns | 317.69 (1779) |
| NMN, 125 microns | 336.8 (1886) |
| Mylar, 87.5 microns | 485.38 (2718) |

**Table 2B - Tensile Properties**

| Sample | Elongation | Tensile strength MPa (PSI) | Tensile Modulus MPa (PSI) |
|---|---|---|---|
| High Mw PAI/PET/High Mw PAI, 125 microns | 28.64% | 73.84 (10710) | 341.13 (49477) |
| Low Mw PAI/PET/ Low Mw PAI 125 microns | 61.52% | 98.29 (14256) | 166.16 (24099) |
| NMN, 125 microns | 18.16% | 87.15 (12640) | 481.79 (69878) |
| Mylar, 87.5 microns | 21.36% | 136.06 (19734) | 638.44 (92598) |

The Tear strength properties reported in Table 2A were obtained in accordance with ASTM D624.

The Tensile properties of tensile strength and tensile modulus were obtained in accordance with ASTM D638.

The volume resistivity of composite insulating films comprising a layer of PET film and including layers of partially cured poly(amide)imide is set forth in Table 3 below.

**Table 3**

| Sample | Volume Resistivity Ohm-cm |
|---|---|
| High Mw PAI/Mylar/High Mw PAI, 125 microns | 1.16 x 10¹⁶ |
| Low Mw PAI/Mylar/ Low Mw PAI 125 microns | 1.59 x 10¹⁶ |
| NMN, 125 microns | 2.23 x 10¹⁶ |
| Mylar, 87.5 microns | 9.16 x 10¹⁵ |

The volume resistivity values were obtained in accordance with ASTM D257.

The dielectric breakdown of composite insulating films comprising a layer of polyester film and including layers of partially cured poly(amide)imide is set forth in Table 4 below.

**Table 4**

| Sample | Dielectric breakdown kV/µm (KV/MIL) |
|---|---|
| High Mw PAI/Mylar/High Mw PAI, 125 microns | 0.098 (2.48) |
| Low Mw PAI/Mylar/ Low Mw PAI 125 microns | 0.108 (2.76) |
| NMN, 125 microns | 0.071 (1.81) |
| Mylar, 87.5 microns | 0.18 (4.58) |

The Dielectric break down values were obtained in accordance with ASTM D-115.

The composite insulting films comprising a layer of polyester film and including layers of uncured poly(amide)imide were subjected to chemical resistance testing. The results of the chemical resistance testing is set forth in Table 5 below. Material was submerged in each of the solvents/solutions below for one day. Material was then observed for physical changes.

**Table 5**

| Solvent | High Mw PAI/Mylar/High Mw PAI, 125 µm (microns) | Low Mw PAI/Mylar/ Low Mw PAI 125 µm (microns) | NMN, 125 µm (microns) | Mylar, 87.5 µm (microns) |
|---|---|---|---|---|
| | 1 day | | | |
| Acetone | No change | No change | No change | No change |
| Ethanol | No change | No change | No change | No change |
| Toluene | No change | No change | No change | No change |
| 20% HCl | No change | No change | No change | No change |
| 50% Acetic acid | No change | No change | No change | No change |
| 25% Sulfuric acid | No change | No change | No change | No change |

### Example 4: poly(amide)imide on base glass cloth layer

The poly(amide)imide resin solutions were cast onto front side of a base PET polyester film with a silicone release agent (100 microns) using a slot coating method. The composite film was then dried in an oven at 175°C for roughly 2 minutes to remove solvent leaving 25 microns of a partially cured PAI layer on both the front side of the PET film. Dow Corning 282 adhesive was then applied to the PAI film surface by the slot die coating method. The composite film was then dried in an oven at 150°C for roughly 2 minutes to remove all solvent leaving 12.5 microns of adhesive the top side of the PAI film. A 100 micron glass cloth was then laminated to the PAI/PET base support with pressure. The PET layer was then removed leaving the PAI film laminated to the glass cloth. The electrical properties were tested to give a dielectric breakdown of 5250 volts. The mechanical strength was equivalent to the native glass cloth.

The composite insulating film and methods should not be limited to any single embodiment, but rather construed in breadth and scope in accordance with the recitation of the appended claims.

## Claims

1. A flexible and self-supporting composite insulating film consisting of:
a base support layer comprising glass cloth;
an adhesive layer; and
a partially cured poly(amide)imide film layer laminated to said base support layer through the use of the adhesive.

2. The composite insulating film of claim 1, wherein the thickness of the composite film is from 63.5 µm (2.5 mils) to 406.4 µm (16 mils).

3. The composite film of claim 1, wherein the thickness of said partially cured poly(amide)imide layer is 12.7 - 50.8 µm (0.5-2 mil).

4. A process for preparing a flexible and self-supporting composite film comprising:
- Providing a first base support layer that is selected from a polyamide film, a polyimide film, a polyester film, a polyethersulfone film, a polysulfone film, organic papers, inorganic papers, or a polyetherimide film;
- Casting a poly(amide)imide film layer onto at least one major opposite facing surfaces of said base support layer;
- Partially curing said poly(amide)imide film layer;
- Stripping said partially cured poly(amide)imide film layer from said base support layer; and
- Laminating said partially cured poly(amide)imide film layer to a second base support layer of glass cloth through the use of an adhesive.

5. The process of claim 4, wherein said laminating comprises adhesively laminating said film layer to said second base support layer and wherein said adhesives are selected from pressure sensitive adhesives and thermosetting adhesives.

6. The process of claim 5, wherein the first base support layer is a polyester film.

7. A method of providing insulation to an electric motor or transformer comprising:
providing a flexible and self-supporting composite film of any one of claims 1-3; and
inserting said composite film into an electric motor or transformer.

8. An electric motor or transformer comprising:
a component to be insulated; and
a flexible and self-supporting composite film of any one of claims 1-3 positioned adjacent said component.

## Patentansprüche

1. Flexibler und selbsttragender isolierender Verbundfilm, bestehend aus:
einer Basisträgerschicht, umfassend Glastuch;
einer Klebeschicht; und
einer teilgehärteten Poly(amid)imidfilmschicht, die mittels der Verwendung des Klebstoffs an die Basisträgerschicht laminiert ist.

2. Isolierender Verbundfilm nach Anspruch 1, wobei die Dicke des Verbundfilms 63,5 µm (2,5 mil) bis 406,4 µm (16 mil) beträgt.

3. Verbundfilm nach Anspruch 1, wobei die Dicke der teilgehärteten Poly(amid)imidschicht 12,7 bis 50,8 µm (0,5 bis 2 mil) beträgt.

4. Prozess zur Herstellung eines flexiblen und selbsttragenden Verbundfilms, umfassend:
- Bereitstellen einer ersten Basisträgerschicht, die ausgewählt ist aus einem Polyamidfilm, einem Polyimidfilm, einem Polyesterfilm, einem Polyethersulfonfilm, einem Polysulfonfilm, organischen Papieren, anorganischen Papieren oder einem Polyetherimidfilm;
- Gießen einer Poly(amid)imidfilmschicht auf mindestens eine der einander gegenüber liegenden Hauptoberflächen der Basisträgerschicht;
- Teilhärten der Poly(amid)imidfilmschicht;
- Strippen der teilgehärteten Poly(amid)imidfilm-schicht von der Basisträgerschicht; und
- Laminieren der teilgehärteten Poly(amid)imid-filmschicht an eine zweite Basisträgerschicht aus Glastuch mittels der Verwendung des Klebstoffs.

5. Prozess nach Anspruch 4, wobei die Laminierung Klebelaminierung der Filmschicht an die zweite Basisträgerschicht umfasst, und wobei die Klebstoffe ausgewählt sind aus Haftklebstoffen und wärmehärtenden Klebstoffen.

6. Prozess nach Anspruch 5, wobei die erste Basisträgerschicht ein Polyesterfilm ist.

7. Verfahren zum Bereitstellen von Isolierung für einen Elektromotor oder Transformator, umfassend:
Bereitstellen eines flexiblen und selbsttragenden Verbundfilms nach einem der Ansprüche 1 bis 3; und
Einsetzen des Verbundfilms in einen Elektromotor oder Transformator.

8. Elektromotor oder Transformator, umfassend:
eine zu isolierende Komponente; und
einen flexiblen und selbsttragenden Verbundfilm nach einem der Ansprüche 1 bis 3, der benachbart zu der Komponente positioniert ist.

## Revendications

1. Film isolant composite flexible et autoporteur constitué de :
une couche de support de base comprenant du tissu de verre ;
une couche d'adhésif ; et
une couche de film de poly(amide)imide partiellement durcie stratifiée sur ladite couche de support de base au moyen de l'utilisation de l'adhésif.

2. Film isolant composite selon la revendication 1, dans lequel l'épaisseur du film composite est de 63,5 µm (2,5 mil) à 406,4 µm (16 mil).

3. Film composite selon la revendication 1, dans lequel l'épaisseur de ladite couche de poly(amide)imide partiellement durcie est de 12,7 à 50,8 µm (0,5 à 2 mil).

4. Procédé de préparation d'un film composite flexible et autoporteur comprenant :
- la fourniture d'une première couche de support de base qui est choisie parmi un film de polyamide, un film de polyimide, un film de polyester, un film de polyéthersulfone, un film de polysulfone, des papiers organiques, des papiers inorganiques ou un film de polyétherimide ;
- le coulage d'une couche de film de poly(amide)imide sur au moins une surface majeure opposée de ladite couche de support de base ;
- le durcissement partiel de ladite couche de film de poly(amide)imide ;
- le décapage de ladite couche de film de poly(amide)imide partiellement durcie à partir de ladite couche de support de base ; et
- la stratification de ladite couche de film de poly(amide)imide partiellement durcie sur une deuxième couche de support de base de tissu de verre au moyen de l'utilisation d'un adhésif.

5. Procédé selon la revendication 4, dans lequel ladite stratification comprend la stratification adhésive de ladite couche de film sur ladite deuxième couche de support de base et dans lequel lesdits adhésifs sont choisis parmi des adhésifs autocollants et des adhésifs thermodurcissables.

6. Procédé selon la revendication 5, dans lequel la première couche de support de base est un film de polyester.

7. Procédé pour fournir une isolation à un moteur ou transformateur électrique comprenant :
la fourniture d'un film composite flexible et autoporteur selon l'une quelconque des revendications 1 à 3 ; et
l'insertion dudit film composite dans un moteur ou transformateur électrique.

8. Moteur ou transformateur électrique comprenant :
un composant à isoler ; et
un film composite flexible et autoporteur selon l'une quelconque des revendications 1 à 3 positionné de façon adjacente audit composant.
